## Europäisches Patentamt

## European Patent Office

## Office européen des brevets

(19)

(11) Veröffentlichungsnummer: **0 324 768**

**B1**

(12) **EUROPÄISCHE PATENTSCHRIFT** ·

(45) Veröffentlichungstag der Patentschrift: **19.09.90**

(51) Int. Cl.⁵: **F 16 D 65/853, B 60 T 1/06**

(21) Anmeldenummer: **87906417.8**

(22) Anmeldetag: **29.09.87**

(86) Internationale Anmeldenummer:
**PCT/EP87/00557**

(87) Internationale Veröffentlichungsnummer:
**WO 88/02450 07.04.88 Gazette 88/08**

(54) REIBUNGSBREMSE MIT FLÜSSIGKEITSKÜHLUNG.

(30) Priorität: **30.09.86 PCt/ep86/00561**

(43) Veröffentlichungstag der Anmeldung:
**26.07.89 Patentblatt 89/30**

(45) Bekanntmachung des Hinweises auf die
Patenterteilung:
**19.09.90 Patentblatt 90/38**

(84) Benannte Vertragsstaaten:
**DE FR GB IT**

(56) Entgegenhaltungen:
**EP-A-0 058 107**
**EP-A-0 143 898**
**DE-A-3 248 250**
**DE-A-3 545 369**

(73) Patentinhaber: **ZAHNRADFABRIK
FRIEDRICHSHAFEN AKTIENGESELLSCHAFT
Löwentaler Strasse 100 Postfach 2520
D-7990 Friedrichshafen 1 (DE)**

(72) Erfinder: **HUFF, Martin
Vogelherdbogen 81
D-7992 Tettnang (DE)**
Erfinder: **KUCHELMEISTER, Ulrich, Ludwig
Gerberstrasse 7
D-7990 Friedrichshafen (DE)**

(74) Vertreter: **Raue, Reimund
Zahnradfabrik Friedrichshafen AG Löwentaler
Strasse 100 Postfach 2520
D-7990 Friedrichshafen 1 (DE)**

EP 0 324 768 B1

## Beschreibung

Die Erfindung betrifft Reibungsbremsen mit Flüssigkeitskühlung nach dem Oberbegriff des Anspruches 1. Reibungsbremsen mit Flüssigkeitskühlung werden insbesondere für schwere Nutzfahrzeuge eingesetzt, wenn auf lange Lebensdauer der Reibbeläge und hohe Funktionssicherheit Wert gelegt wird. Eine Bremsanordnung dieser Art ist beispielsweise bekannt aus der DE-A-3013 431. Bei ihr ergibt sich eine Kühlung nur durch die Tauchschmierung mittels des Getriebeöls innerhalb des Gehäuses. Diese Kühlungsart kann jedoch bei längeren Talfahrten oder hohen Außentemperaturen unzureichend werden. Bei der besagten Konstruktion ist dies insbesondere deshalb der Fall, weil durch die Abstützung der Bremsscheiben zwischen Halbwelle und Hohlrad ein besonders hoher Drehzahlunterschied und damit eine hohe spezifische Bremsleistung bei einer an sich sehr vorteilhaften kompakten Bauweise erreicht wird. Wegen der Kompaktheit steht jedoch auch weniger Gehäuseoberfläche für den Wärmeaustausch zur Verfügung. Bei außergewöhnlich hohen Beanspruchungen kann es daher bei dieser Bauweise zu unerlaubt hohen Temperaturen im Bereich der Planetengetriebe und des Lagers kommen.

Die Aufgabe der Erfindung wird darin gesehen, für solche in Radkopf-Getriebegehäusen integriert eingebauten Scheibenbremsen ein Kühlsystem zu schaffen, bei welchem ohne äußere Abmessungsvergrößerungen eine Kühlflüssigkeit mittels ständig angeschlossener Zu- und Ableitungen über einen außerhalb des Gehäuses am Fahrgestell des Fahrzeuges angebrachten Kühler zirkulieren und unabhängig von der Fahrzeuggeschwindigkeit auf einfachste und betriebssicherste Weise unmittelbar am Ort der Wärmeentstehung, den Reibflächen, vorbeigeführt werden kann.

Die Lösung wird nach den Merkmalen des Anspruches 1 dadurch erreicht, daß vom Kühler her direkt in das Getriebegehäuse mündende und unter dem Lager des Rades hindurchführende Zuleitungen sowie eine Ableitung aus dem sich im Hohlrad bildenden Ölring über den dort eingetauchten Außenrand des Hohlradträgers vorgesehen sind. Die am bekannten konstruktiven Aufbau des Radkopfes vorzunehmenden fertigungstechnischen Änderungen beschränken sich dabei lediglich auf einige Bohrungen in der Wand des Achsrohres bzw. in dem als Hohlradträger dienenden Ringflansch. Da die kompakte, montagegünstige Bremsenanordnung hierbei voll erhalten bleibt, wird ein Wärmestau an Getriebe oder Lager auch bei Dauerbremsungen mit Sicherheit vermieden.

Eine Radkopfbremse mit Anschluß an ein Zirkulations-Kühlsystem ist zwar aus der EP 00 76 387 im Prinzip bekannt, jedoch ist dort die Bremse in einem das Lager außen umgebenden und damit den Radkopf axial verbreiternden Extragehäuse untergebracht und weisen die Bremsscheiben nur eine Abstützung zwischen Achsrohr und Rad auf, so daß die höhere Drehzahldifferenz zwischen Achsrohr und Antriebswelle hier ebenfalls nicht nutzbar ist. Außerdem sind dort wartungsbedürftige Schleifringdichtungen zwischen Getriebe und Bremsgehäuse unumgänglich.

Eine Reibungsbremse mit Flüssigkeitskühlung ist ebenfalls bekannt aus der EP-A-00 58 107. Dort erfolgt eine Kühlung durch Getriebeöl das, radial durch die Bremsscheiben geleitet wird und in Leitungen heran- bzw. abgeführt wird, die innerhalb der rotierenden Halbwelle verlaufen. Bei der besagten Konstruktion liegt keine Abstützung der Bremsscheiben zwischen Halbwelle und Hohlrad und somit kein besonders hoher Drehzahlunterschied und damit keine hohe spezifische Bremsleistung vor. Zudem wird das Planetengetriebe infolge seiner Anordnung zwischen Lager und Bremse vom heißen Kühlöl durchflossen und kann deshalb dabei auch noch von Bremsabrieb beschädigt werden. Eine evtl. Getriebereparatur würde stets auch die Demontage der kompletten Bremse erfordern. Die Demontage des kompletten unzerlegten Radkopfes einschließlich des Hohlradträgers ist ohne Aufbocken des Fahrzeuges nicht möglich, weil die Hohlradträgernabe die Radlager stützt und das Getriebegehäuse nur durch Zerlegung des Rades in mehrere axial geteilte Baugruppen demontabel ist. Schließlich ist die Unterbringung der Ölzuleitung in rotierenden Wellen teuer, verursacht Abdichtungsprobleme und eignet sich nicht für Lenkachsen.

Gegenüber diesen bekannten Bremsenanordnungen ist auch vorteilhaft, daß erfindungsgemäß die Außenoberfläche der hochbelasteten Lager in der Radnabe nicht durch ein übergestülptes Bremsgehäuse verkleidet sind, welches selbst noch eine höhere Wärmeleistung entwickeln kann, sondern daß im Gegenteil das Nabengehäuse unmittelbar von Luft umströmt sein und evtl. sogar noch mit oberflächenvergrößernden Rippen oder Flügeln als Kühlflächen für das Lager ungehindert von Bremsgehäuseteilen oder dergleichen nutzbar gemacht werden kann.

Erfindungsgemäß ist auch noch von Vorteil, daß eine Umrüstung normaler Tauchschmierungs-Radkopfgetriebe wie nach dem in der DE-B 30 13 431 offenbarten Stand der Technik ohne irgendwelche äußeren Abmessungsänderungen mit den gleichen Bauteilen möglich ist und daß auch eine evtl. Erneuerung von Dichtungen und Bremsscheiben weiterhin ohne Raddemontage möglich bleibt und auch keine zusätzlichen außenliegenden Dichtungen nötig sind.

Die Vorteile weiterer Ausgestaltungen geben die Unteransprüche an.

— Bei Schaffung eines Ringkanals, in welchem die Zuleitungen münden, unter einem als Bremsscheibenträger genutzten Wellenbund, wird eine besonders intensive und gleichmäßige Kühlung der Bremsscheiben durch Fliehkraftnutzung sichergestellt.

— Mittels am Betriebsbremskolben angelenkter Abdeckelemente, wie z. B. Blechfahnen, läßt sich die Bremskühlung so steuern, daß nur beim tatsächlichen Bremsen eine Durchspülung der Reibflächenspalte erfolgt, jedoch bei ungebremster Fahrt Schleppmomente aus Überschüssen der Kühlflüssigkeit vermieden werden.

— Wo gewünscht, kann sogar eine sehr wirksame Abtrennung der Schmierflüssigkeiten (Öl) im eigentlichen Getriebe und im Radlager von der evtl. andersartigen zur Bremsenkühlung eingesetzten Kühlflüssigkeit mittels im Reparaturfalle gut zugänglicher Ringspalt-Dichtungen an Hohlrad und Bremsdruckplatte erfolgen, so daß keine nachteilige Vermischung der verschiedenen Substanzen möglich ist.

Die Erfindung ist nicht auf die Merkmalskombinationen der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

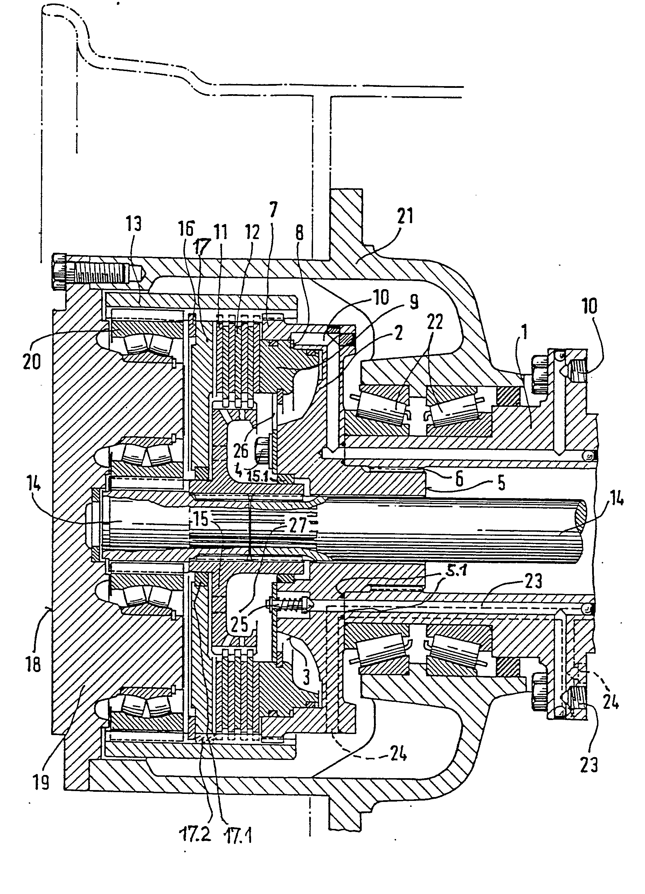

Die Erfindung wird nachfolgend anhand eines Ausführungsbeispieles näher erläutert. In der Zeichnung ist einem Achsrohr 1 ein als Ringflansch gestalteter Hohlradträger 2 formschlüssig und druckdicht getriebeseitig vorgeflanscht. Der Hohlradträger 2 weist einen inneren, getriebeseitigen Nabenbund 3 auf, durch den von der Getriebeseite her eine Schraubbefestigung 4 in die getriebeseitige Stirnseite des Achsrohres 1 hindurchgeführt ist. Ein weiterer innerer aber getriebeabgewandter Nabenbund 5 des Hohlradträgers 2 ist im Beispiel mit einer Außenverzahnung versehen, welche in eine Innenverzahnung 6 des Achsrohres 1 eingreift.

Der Hohlradträger 2 kann in einer weiteren Ausgestaltung auch auf der Außenseite des Achsrohres 1 direkt unterhalb der Radlager vorgesehen werden, ohne die Erfindung zu beeinträchtigen.

Auch kann die Schraubbefestigung 4 entweder, wie gezeichnet, aus den Nabenbund 5 des Hohlradträgers 2 axial durchdringenden und stirnseitig in das Achsrohr 1 hineingreifenden Stiftschrauben oder aber aus einer großen, verdrehgesicherten Gewindemutter auf einem Außengewinde des Achsrohres 1 bestehen, auf das der Hohlradträger 2 aufgeschoben ist.

Der äußere Ringkranz des Hohlradträger 2 umfaßt einen Betriebsbrems-Ringzylinder 8, durch welchen ein Betriebsbrems-Ringkolben 9 bei Druckmittelzufuhr über im Hohlradträger 2 und im Achsrohr 1 eingelassene Betriebsbrems-Druckleitungen 10 gegen Bremsscheiben 11, 12 anlegbar ist. Die äußeren Bremsscheiben sind in einem durch den Hohlradträger 2 drehfest gehaltenen Hohlrad 13 axial verschieblich aber drehfest gehalten. Die inneren Bremsscheiben 12 sind durch einen von der Halbwelle 14 angetriebenen Bremsscheibenträger 15 in Drehrichtung mitnehmbar und ebenfalls axial verschieblich. Bei Druckbeaufschlagung durch den Kolben 9 legen sich alle Bremsscheiben gegen eine durch einen Sicherungsring 16 im Hohlrad 13 axial festgehaltene Bremsdruckplatte 17 an, welche im Beispiel bis zu einer Drehdichtung über der Halbwelle 14 bzw. der Nabe des Bremsscheibenträgers 15 radial herunterreicht, so daß die Umgebung der Bremse 11, 12 weitgehend flüssigkeitsdicht vom Bereich des anschließenden Planetengetriebes abgetrennt ist. Dieses Planetengetriebe besteht im wesentlichen aus an einem stirnseitigen Gehäusedeckel 18 mittels Planetenbolzen 19 gelagertem Satz von Planetenrädern 20, welche sich gegen eine Innenverzahnung des Hohlrades 13 abstützen und damit den Gehäusedeckel 18 samt dem daran angeflanschten Getriebegehäuse 21, welches hier auch als Felgenflansch dient, mit stark verminderter Drehzahl antreiben. Das Getriebegehäuse 21 kann mit Kühlrippen oder anderer eine Abkühlung begünstigender Oberflächengestaltung versehen werden, da hier keine Aufbauten über dem Lager 22, welches auf der bremsenabgewandten Seite des Hohlrades 2 auf das Achsrohr 1 abgestützt ist, erforderlich ist. Das im Beispiel aus zwei Kegelrollenlagern bestehende Lager 22 wird ebenfalls durch die Schraubbefestigung 4 axial gegen einen auf der bremsenabgewandten Seite vorgesehenen Außenringbund des Achsrohres 1 angedrückt. Über diesen fahrgestellfesten Außenringbund des Achsrohres 1 erfolgt auch die Zufuhr der verschiedenen Druckmittel in separaten Leitungen, nämlich Betriebsbremsdruck 10, Kühlmittel-Zuleitung 23, Kühlmittel-Ableitung 24. Dazu sind im Achsrohr 1 und im getriebeseitigen Nabenbund 3 des Hohlradträgers 2 am Umfang gleichmäßig versetzt angeordnete achsparallele Bohrungen angebracht, welche an der Stoßstelle des Hohlradträgers 2 zum Achsrohr 1 zusätzlich abgedichtet sind. Die Kühlmittel- Zuleitung 23 mündet etwa auf der Höhe des Teilkreises der Schraubbefestigungen 4 und ist im Beispiel durch zungenartige Abdeckelemente 25, die der Bremskolben 9 in Axialrichtung mitnehmen kann, normalerweise abgesperrt. Bei Betätigung des Bremskolbens 9 nimmt er diese Absperrelemente 25 in die gestrichelte Position mit, wobei sich die Kühlmittel- Zuleitung 23 öffnet. Bei Wegnahme des Betriebsbremsdruckes 10 wird der Betriebsbrems-Ringkolben 9 durch nicht gesondert gezeigte Rückstellfedern 26, welche beispielsweise aus ebenfalls durch die Schraubbefestigung 4 gehaltenen und außen am Kolben 9 angelenkten Blattfedern bestehen könnten, wieder in seine Ausgangsposition, weitestmöglichst in den Hohlradträger 2 zurückgefahren, wodurch die Kühlmittel-Zuleitung wieder versperrt wird. Die Ausgestaltung der Absperrelemente 25 ist dabei an sich beliebig. Kühlmittel-Ableitung 24 erfolgt über am äußeren Nabenbund 7 angebrachte Eintrittsöffnungen der Kühlmittel-Ableitung 24, über welche das erwärmte Kühlmittel zu einem hier nicht gezeigten Kühler zurückgefördert wird. Das radial unterhalb der Bremsen 11, 12 in einen Ölfang-Ringraum 27 austretende gekühlte Kühlmittel kann danach durch im Außenkranz des Bremsscheibenträgers 15 vorgesehene Radialbohrungen unter Zuhilfenahme der Zentrifugalkraft mit hoher Geschwindigkeit in den Reibflächenbereich zwischen den Bremsscheiben 11, 12 hineingeschleudert und gegebenenfalls radial durch das Hohlrad 13 an die Innenwand des Getriebegehäuses gefördert werden. Es kann sich dabei nicht mit dem Schmiermittel des Planetengetriebes 14, 19, 20 oder dem des Lagers 22 vermischen, wenn nicht im Detail dargestellte Spaltdichtungen vor denselben angebracht sind, so daß dort normale Tauch- oder Fettschmierungen erfolgen können. Zur Montage bzw. Demontage kann bei der gezeigten Anordnung das gesamte Hohlrad 13 einschließlich Hohlradträger 2, Planetengetriebe 19, 20 und Bremsscheibenträger 15 vom Flansch des Achsrohres 1 abgeschraubt werden, ohne daß das Rad bzw. das Getriebegehäuse 21 vom Lager 22 abgezogen werden muß. Der Bremsscheibenträger 15 kann auch in seinem Radialsteg mit axialen Öffnungen versehen sein, um auch mit getriebeseitig vorkragendem Außenkranz montiert werden zu können.

Die Kühlung des Kühlmittels und das Pumpen desselben können auf beliebige Weise, gegebenenfalls auch mit anderen Kühlmittel-Teilströmen zusammen an zentraler Stelle erfolgen, ohne die Platzverhältnisse in der Radnabe zu beeinträchtigen. Wo erforderlich, kann die sinngemäß gleiche Anordnung auch für lenkbare Radkopfgetriebe vorteilhaft eingesetzt werden, da für die Ölzirkulation keine Verbreiterung der Radkopfgetriebe-Außenmaße erforderlich wird.

Die Steuerung der Kühlmittelzufuhr ist darüber hinaus auch der Bremsbetätigungseinrichtung außerhalb des Radkopfes auf an sich bekannte Weise ankoppelbar, so daß beispielsweise die Pumpe für die Kühlmittel-Zufuhr nur während Bremsvorgängen eingeschaltet wird.

Bezugszeichen
1 Achsrohr
2 Hohlradträger
3 Nabenbund, getriebeseitig innen von 2
4 Schraubbefestigung
5 Nabenbund, getriebeabgewandt von 2
5.1 Stoßdichtungen zwischen 1 und 2
6 Innenverzahnung von 1
7 Nabenbund, getriebeseitig außen von 2
8 Betriebsbrems-Ringzylinder
9 Betriebsbrems-Ringkolben
10 Betriebsbrems-Druckmittelzuleitung
11 Bremsscheiben, außen
12 Bremsscheiben, innen
13 Hohlrad
14 Halbwelle
15 Bremsscheibenträger
15.1 Drehdichtung zwischen 2 und 15
16 Sicherungring in 13
17 Bremsdruckplatte
17.1 Spaltdichtungen zwischen 17 und 13 bzw. 15
17.2 Spaltdichtungen zwischen 17 und 13 bzw. 15
18 Gehäusedeckel
19 Planetenbolzen
20 Planetenräder
21 Getriebegehäuse
22 Lager für 21
23 Kühlmittel-Zuleitung
24 Kühlmittel-Ableitung
25 Abdeckelemente
26 Rückstellfedern
27 Ölfang-Ringraum

**Patentansprüche**

1. Reibungsbremse mit Flüssigkeitskühlung, insbesondere für Radkopf-Endgetriebe,

mit einem auf einer in einem Fahrgestell festen Achsrohr (1) drehbaren Halbwelle (14) angeordneten Sonnenrad,

welches an einem Radkopfdeckel (18) gelagerte Planetenräder (20) treibt, die gleichzeitig mit einer Innenverzahnung eines Hohlrades (13) kämmen, welches über einen am Achsrohr befestigten Hohlradträger (2) drehfest ist,

wobei der Radkopfdeckel (18) mit einem als Radnabe ausgebildeten Getriebegehäuse (21) verbunden ist,

das über ein Lager (22) auf der getriebeabgewandten Seite des Hohlradträgers (2) abgestützt ist,

wobei zwischen der Halbwelle (14) und dem Hohlrad (13) eine druckmittelbetätigbare Scheibenbremse (11, 12) vorgesehen ist, deren Betriebsbrems-Ringkolben (9) durch einen im äußeren Nabenbund (7) des Hohlradträgers (2) eingelassenen Betriebsbrems-Ringzylinder (8) bei Druckmitteleinleitung über im Hohlradträger (2) und im Achsrohr (1) eingelassene Druckleitungen (10) aktivierbar ist,

dadurch gekennzeichnet,

daß im Achsrohr (1) von der Druckmittel-Zuleitung (10) getrennt geführte Kühlmittel-Zu und -Ableitungen (23, 24) unter dem Lager (22) hindurchführend vorgesehen sind,

daß die Kühlmittel-Zuleitung (23) im getriebeseitigen inneren Nabenbund (3) des Hohlradträgers (2) vor der Stirnseite des Achsrohres (1) radial unter den Bremsscheiben (11, 12) mündet,

und daß die Kühlmittel-Ableitung (24) am äußeren Nabenbund (7) des Hohlradträgers (2) beginnt und über einen axialen Dichtspalt in das Achsrohr (1) übertritt, von wo es in ein außerhalb des Bremsenbereiches gelegenes Kühlaggregat ableitbar ist, aus dem die Kühlflüssigkeit nach Abkühlung über die Zuleitungen (23) wieder an die Bremse (11, 12) zurückförderbar ist.

2. Reibungsbremse nach Anspruch 1, dadurch gekennzeichnet,

daß die Kühlmittel-Zuleitungen (23) in einen durch einen taschenartigen Querschnitt des Bremsscheibenträgers (15) mit axialem Außenkranz gebildeten Ölfang-Ringraum (27) münden,

und daß aus diesem Ölfang-Ringraum (27) Öffnungen in Richtung der Reibflächen der Bremsscheiben (11, 12) durch den Außenkranz des Bremsscheibenträgers (15) hindurchführend vorgesehen sind.

3. Reibungsbremse nach Anspruch 1, dadurch gekennzeichnet, daß die Zuleitungen (23) durch mit dem Betriebsbrems-Ringkolben (9) axial auslenkbare Abdeckelemente (25) bei geöffneter Bremse (11, 12) verschlossen sind, bei geschlossener Bremse jedoch die Mündungen der Zuleitungen (23) geöffnet haben.

4. Reibungsbremse nach Anspruch 1, dadurch gekennzeichnet, daß zwischen dem Planetengetriebe (19, 20) und dem Bereich der Bremsscheiben (11, 12) Abdichtungselemente vorgesehen sind, die die Kühlflüssigkeit vom Planetengetriebe (19, 20) fernhalten.

5. Reibungsbremse nach Anspruch 1, dadurch gekennzeichnet, daß zwischen Hohlradträger (2) und Achsrohr (1) Dichtungen vorgesehen sind, die die Kühlflüssigkeit vom Lager (22) fernhalten und Montagespalte zwischen Zu- und Ableitungen (23, 24) verschließen.

**Revendications**

1. Frein à friction refroidi par liquide, notamment pour une boîte de transmission de moyeu de roue,
comportant un pignon planétaire sur un demi-arbre (14) rotatif dans un tube d'essieu fixe (1) d'un châssis,
ce pignon entraînant des pignons satellites (20) montés sur paliers sur un couvercle de moyeu (18) et s'engrenant en outre sur une denture intérieure d'une couronne creuse (13),
laquelle est empêchée de tourner au moyen d'un porte-couronne (2) fixé au tube d'essieu,
le couvercle de moyeu (18) étant fixé à un carter de boîte (21) formant un moyeu de roue,
qui est porté par un palier (22) du côté du porte-couronne (2) opposé à l'engrenage,
et comportant, entre le demi-arbre (14) et la couronne creuse (13), un frein à disques (11, 12) à commande hydraulique ayant un piston annulaire de frein (9) qui est actionné au moyen d'un cylindre annulaire de frein (8) disposé à l'intérieur d'un rebord extérieur annulaire (7) du porte-couronne (2) par introduction de fluide hydraulique sous pression par des conduits (10) ménagés dans le porte-couronne (2) et dans le tube d'essieu (1),
caractérisé:
en ce que des conduits (23, 24) d'amenée et d'évacuation de fluide de refroidissement sont prévus dans le tube d'essieu (1) séparément du conduit (10) de fluide hydraulique et passent sous le palier (22),
en ce que le conduit d'amenée (23) du fluide de refroidissement débouche du moyeu intérieur (3) du porte-couronne (2), devant l'extrémité du tube d'essieu (1) et du côté de l'engrenage, à un emplacement situé radialement en dessous des disques de frein (11, 12),
en ce que le conduit d'évacuation (24) du fluide de refroidissement commence dans le rebord extérieur annulaire (7) du porte-couronne (2) et traverse un joint étanche pour s'étendre dans le tube d'essieu (1), d'où le fluide peut être conduit à une unité de refroidissement placée hors de la zone des freins et de laquelle le fluide refroidi peut revenir au frein (11, 12) par les conduits d'amenée (23).

2. Frein à friction selon la revendication 1, caractérisé:
en ce que les conduits d'amenée (23) de fluide de refroidissement débouchent dans une chambre à huile annulaire (27) formée par une section transversale creuse du support (15) de disques de frein, ayant un rebord extérieur s'étendant axialement,
et en ce qu'à partir de cette chambre à huile annulaire (27), des ouvertures sont prévues à travers ledit rebord extérieur du support (15) de disques de frein, en direction des surfaces de friction des disques de frein (11, 12).

3. Frein à friction selon la revendication 1, caractérisé en ce que lesdits conduits d'amenée (23), quand le frein (11, 12) est desserré, sont fermés par des éléments d'obturation (25) agencés pour être déplacés axialement avec le piston annulaire de frein (9), de sorte que les débouchés des conduits d'amenée (23) sont ouverts quand le frein est serré.

4. Frein à friction selon la revendication 1, caractérisé en ce que, entre l'engrenage planétaire (19, 20) et la zone des disques de frein (11, 12), il est prévu des éléments d'étanchéité qui maintiennent le fluide de refroidissement à l'écart de l'engrenage planétaire (19, 20).

5. Frein à friction selon la revendication 1, caractérisé en ce que, entre le porte-couronne (2) et le tube d'essieu (1), il est prévu des moyens d'étanchéité qui maintiennent le fluide de refroidissement à l'écart du palier (22) et qui obturent le joint de montage entre les conduits d'amenée et d'évacuation (23, 24).

**Claims**

1. Friction brake with fluid cooling, in particular for wheel head end drives,
having a sun gear mounted on a half-shaft (14) rotatable on an axle tube (1) fixed in a chassis,
which sun gear drives planetary gears (20), which are mounted on a wheel head cover (18) and mesh simultaneously with inner toothing of a ring gear (13),
which sun gear is non-rotatable via a ring gear carrier (2) fixed to the axle tube,
the wheel head cover (18) being connected to a gearbox casing (21) formed as a wheel hub,
which gearbox casing is supported on the side of the ring gear carrier (2) facing away from the gearbox via a bearing (22),
a disk brake (11, 12), actuatable by a pressure medium being provided between the half-shaft (14) and the ring gear (13), its operating brake annular piston (9) being actuatable by an operating brake annular cylinder (8) embedded in the outer hub collar (7) of the ring gear carrier (2) when pressure medium is introduced via pressure lines (10) embedded in the ring gear carrier (2) and the axle tube (1), characterised
in that cooling medium supply and discharge lines (23, 24) are provided in the axle tube (1), are separately guided from the pressure medium supply line (10), and lead through beneath the bearing (22),
in that the cooling medium supply line (23) opens out in the inner hub collar (3) of the ring gear carrier (2) on the gearbox side, radially below the brake disks (11, 12) in front of the end face of the axle tube (1),

and in that the cooling medium discharge line (24) starts at the outer hub collar (7) of the ring gear carrier (2) and crosses into the axle tube (1) via an axial sealing gap in the axle tube (1), whence it is dischargeable into a cooling aggregate located outside the brake region, from which the cooling fluid can be recycled to the brake (11, 12) again after cooling, via the supply lines (23).

2. Friction brake according to claim 1, characterised

in that the cooling medium supply lines (23) open into an oil collecting annular space (27) formed with an axial outer ring by a pocket-like cross-section of the brake disk carrier (15),

and in that apertures are provided leading out of this oil collecting annular space (27) in the direction of the friction surfaces of the brake disks (11, 12) so as to lead through the outer ring of the brake disk carrier (15).

3. Friction brake according to claim 1, characterised in that the supply lines (23) are sealed when the brake (11, 12) is open by covering elements (25) which can be guided out axially with the operating brake annular piston (9), but which have opened the openings of the supply lines (23) when the brake is closed.

4. Friction brake according to claim 1, characterised in that sealing elements, which keep the cooling fluid away from the planetary gear (19, 20), are provided between the planetary gear (19, 20) and the region of the brake disks (11, 12).

5. Friction brake according to claim 1, characterised in that seals, which keep the cooling fluid away from the bearing (22) and seal the assembly gap between supply and discharge lines (23, 24), are provided between the ring gear carrier (2) and the axle tube (1).